(19) **Europäisches Patentamt European Patent Office Office européen des brevets**

(11) **EP 2 839 715 B1**

(12) **EUROPEAN PATENT SPECIFICATION**

(45) Date of publication and mention
of the grant of the patent:
**03.10.2018 Bulletin 2018/40**

(51) Int Cl.:
*H04W 88/08* (2009.01)  *H04W 88/02* (2009.01)
*H04W 74/06* (2009.01)  *H04W 52/02* (2009.01)

(21) Application number: **13778954.1**

(22) Date of filing: **20.04.2013**

(86) International application number:
**PCT/CN2013/074481**

(87) International publication number:
**WO 2013/155990 (24.10.2013 Gazette 2013/43)**

(54) **METHOD AND APPARATUS FOR DATA TRANSMISSION IN WIRELESS NETWORK**

VERFAHREN UND VORRICHTUNG ZUR DATENÜBERTRAGUNG IN EINEM DRAHTLOSEN NETZWERK

PROCÉDÉ ET APPAREIL DESTINÉS À LA TRANSMISSION DE DONNÉES DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2012  US 201261636136 P
19.04.2013  US 201313866504**

(43) Date of publication of application:
**25.02.2015  Bulletin 2015/09**

(73) Proprietor: **Huawei Technologies Co., Ltd.
Longgang District
Shenzhen, Guangdong 518129 (CN)**

(72) Inventors:
• **KWON, Young Hoon
San Diego, California 92129 (US)**
• **YANG, Yunsong
San Diego, California 92130 (US)**
• **RONG, Zhigang
San Diego, California 92129 (US)**
• **SHU, Guiming
Shenzhen
Guangdong 518129 (CN)**

(74) Representative: **Kreuz, Georg Maria
Huawei Technologies Duesseldorf GmbH
Riesstraße 25
80992 München (DE)**

(56) References cited:
EP-A1- 2 844 016     EP-A2- 2 160 061
WO-A1-2007/143352    WO-A1-2011/116533
WO-A2-2007/022522    WO-A2-2011/097141

## Description

## BACKGROUND

A wireless local area network (WLAN) typically includes an Access Point (AP) and one or more stations (STAs). Each station may be a device such as a notebook computer, a personal digital assistant (PDA), a wireless VoIP telephone or the like that transmits radio signals to and receives radio signals from other STAs in the local area network via the AP. In a downlink traffic transmission scheme according to the Institute of Electrical and Electronics Engineers (IEEE) 802.11 protocol, the AP periodically sends a beacon frame to the stations. Each beacon frame contains a traffic indication map (TIM) that has data indicating whether there is a downlink data packet buffered at the AP for each of the stations. After a station reads the TIM and finds out that there is a downlink data packet for it buffered at the AP, the station sends out a power save poll (PS-Poll) frame indicating that the station is available and ready to receive the downlink data packet. After receiving the PS-Poll frame, the AP either sends the downlink data packet to the station directly, or sends an acknowledgement (ACK) frame in response to the PS-Poll frame if the AP is not ready to send out the downlink data packet. After sending the ACK frame, the AP will send the downlink data packet soon.

For wireless stations, power consumption is an important consideration. In order to save power, a station may want to go to sleep unless it has to be awake for sending or receiving transmissions. When there are multiple stations in the WLAN, it is important to coordinate the wake/sleep states of the stations so that they don't have to be awake for much longer than necessary for them to receive transmissions of their respective downlink packets from the AP. Also, during the limited time interval between two beacon frames, the AP may need to transmit downlink packets to multiple stations, and the downlink packets may contain different amounts of data. It is important for the AP to use the available downlink time in an efficient manner to deliver the downlink packets to the stations. Existing implementations of the 802.11 downlink scheme do not provide satisfactory solutions for these issues.

EP 2844016 A1 provides a channel access method in a wireless communication system and an apparatus for supporting the same are disclosed. Particularly, the method comprises the steps of: transmitting a beacon frame containing a traffic indication map (TIM); and receiving a power pave (PS)-poll frame within a PS-Poll section set in a station (STA), to which downlink data is designated by the TIM, from the STA, wherein the PS-Poll section can be set differently for each STA within the entire PS-Poll section set in all STAs, to which downlink data is designated by the TIM.

EP 2160061 A2 provides an access point for establishing wireless connection with one or more wireless communication stations which can perform intermittent reception operation, based on a packet transmission system which allocates wireless bands by CSMA/CA, has: unit for describing, in a same packet or in respective packets, buffering information on a downlink packet addressed to a subordinate wireless communication station currently in an intermittent reception state, and transmission prohibition period information indicating a period where transmission from the subordinate wireless communication station is prohibited; unit for transmitting the instruction described packet, in which the description has been made, to the subordinate wireless communication station; unit for making a state of the access point transit to a Doze state immediately after the instruction described packet is transmitted, or when a predetermined number of downlink packets are transmitted; and unit for making a state of the access point transit to an Awake state when the transmission prohibition period elapses from the time of transmission of the packet in which the prohibition period information is described.

## BRIEF DESCRIPTION OF THE DRAWINGS

To illustrate the technical solutions in the embodiments of the present invention or in the prior art more clearly, the following briefly describes accompanying drawings required for describing the embodiments or the prior art.

FIG. 1 is a schematic diagram of a Wireless Local Area Network (WLAN) system according to an embodiment of the present invention;
FIG. 2 is a block diagram of the access point (AP) shown in FIG. 1;
FIG. 3 is a block diagram of one station (STA) shown in FIG. 1;
FIG. 4 is a flow chart of a method for data transmission according to an embodiment of the present invention in connection with the network environment shown in FIG. 1;
FIGS. 5-9 illustrates various implementations of the method shown in FIG. 4; and
FIG. 10 illustrates a frame format of the DL schedule frame shown in FIG. 9.

## DETAILED DESCRIPTION OF THE EMBODIMENTS

To make the objectives, technical solutions, and advantages of the present invention more clear, the following clearly and completely describes the technical solutions according to the embodiments of the present invention with reference to the accompanying drawings in the embodiments of the present invention.

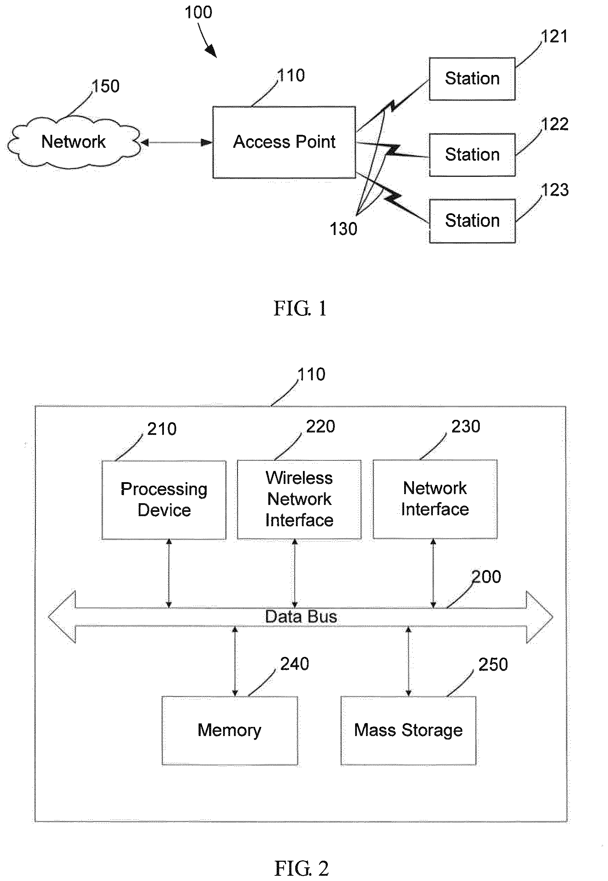

FIG. 1 is a schematic diagram of a Wireless Local Area Network (WLAN) system 100 according to an embodiment of the present invention. The WLAN system 100 includes a central station (e.g., Access Point (AP) 110) connected to a plurality of stations (STAs), for example, STA 121, STA 122 and STA 123. Although FIG.

1 depicts three STAs, the WLAN system 100 can include different numbers of STAs in various scenarios and embodiments. The AP 110 and the STAs 121, 122 and 123 communicate via a WLAN 130 which can be, e.g., 802.11-based network (including, but not limited to 802.11, 802.11b, 802.11a/b, 802.11g, and/or 802.11n). The AP 110 communicates with any number of external devices (not shown) via a network 150.

In different scenarios, the network 150 may be an Internet, an intranet, or any other wired, wireless, or optical network. The AP 110 can be configured to provide wireless communications to the STAs 121, 122 and 123. Depending on the particular configuration, the STAs 121, 122 and 123 may be a personal computer (PC), a laptop computer, a mobile phone, a personal digital assistant (PDA), and/or other device configured for wirelessly sending and/or receiving data. Furthermore, the AP 110 may be configured to provide a variety of wireless communications services, including but not limited to: Wireless Fidelity (WIFI) services, Worldwide Interoperability for Microwave Access (WiMAX) services, and wireless session initiation protocol (SIP) services. In addition, although all the STAs 121, 122 and 123 communicate with the AP 110 in this embodiment, direct peer-to-peer communication between two STAs may be accommodated, with modifications to the WLAN system 100, as will be apparent to those skilled in the art.

FIG. 2 is a block diagram of the AP 110 shown in FIG. 1. The AP 110 may, for example, include a processing device 210, a wireless network interface 220, a network interface 230, a memory 240, and a mass storage 250. Each of these devices is connected across a data bus 200. The processing device 210 may include, for example, a central processing unit (CPU), a semiconductor based microprocessor (in the form of a microchip), a macroprocessor, one or more ASICs, a plurality of suitably configured digital logic gates, or generally any device for executing instructions.

The wireless network interface 220 and the network interface 230 include various components used to transmit and/or receive data/frames over a network environment. By way of example, either the wireless network interface 220 or the network interface 230 may include a device that can communicate with both inputs and outputs, for example, a modulator/demodulator (e.g., a modem), a wireless (e.g., radio frequency (RF)) transceiver, a telephonic interface, a bridge, a router, or a network card. The AP 110 uses the wireless network interface 220 to communicate with the STAs 121, 122 and 123, and uses the network interface 230 to communicate with the network 150. The wireless network interface 220 and the network interface 230 may be combined into one physical unit. The AP 110 may include multiple antennas (not shown) connected to multiple transceivers (not shown) in the wireless network interface 220 respectively, and supports multi-user multiple input multiple output (MU-MIMO) and beamforming.

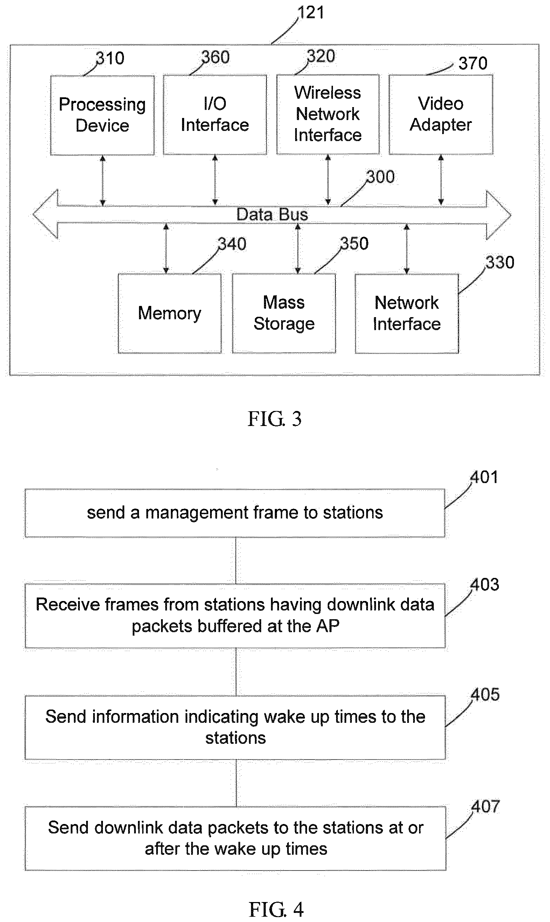

The memory 240 may be one of many types of memory devices, including, for example, a volatile memory element (e.g., RAM, such as DRAM, and SRAM, etc.) and a nonvolatile memory elements (e.g., flash, ROM, nonvolatile RAM, hard drive, tape, CDROM, etc.). The memory 240 includes software stored thereon which may include one or more separate programs, each of which includes a listing of executable instructions for implementing logical functions. Specifically, the software may include a networking related software which may includes a communications protocol stack including a physical layer, a link layer, a network layer and a transport layer. The network related software can be used by the processing device 210 to communicate with the STAs 121, 122 and 123 through the wireless network interface 220. The network related software can further include instructions that cause the processing device 210 to implement the operations illustrated in FIG. 4. It should be noted, however, that operations illustrated in FIG. 4 can also be implemented in hardware or a combination of software and hardware. The memory 240 may be located inside or outside the processing device 210, and may be coupled to the processing device 210 by using various well-known means.

The mass storage 250 may include any type of storage device configured to store data, programs, and other information and to make the data, programs, and other information accessible via the data bus 200. The mass storage 250 may include, for example, one or more of a solid state drive, hard disk drive, a magnetic disk drive, and optical disk drive, or the like.

FIG. 3 illustrates an embodiment of the STA, e.g., the STA 121 as an example, shown in FIG. 1. The STA 121 may, for example, include a processing device 310, a wireless network interface 320, an input/output (I/O) interface 360, a video adapter 370, a memory 340 and a mass storage 350. Each of these devices is connected across a data bus 300. Optionally, the STA 121 may also include a network interface 330, which is also connected across the data bus 300.

The processing device 310 may include any custom made or commercially available a CPU, which may be based on a microprocessor, a macro processor, or one or more application specific integrated circuits (ASICs), or a plurality of suitably configured digital logic gates, such as field-programmable gate arrays (FPGA), or generally any device for executing instructions.

The I/O interface 360 provides any number of interfaces for the input and output of data. For example, where the STA 121 is a personal computer (PC), the I/O interface 360 may interface with user input device which may be a keyboard or a mouse. Where the STA 121 is a handheld device (e.g., PDA, mobile telephone etc.), the I/O interface 360 may interface with function keys or buttons, a touch sensitive screen, etc.

The wireless network interface 320 includes various components used to transmit and/or receive data over a network environment. By way of example, the wireless network interface 320 may include, for example, a modulator/demodulator (e.g., a modem), wireless (e.g., radio frequency (RF)) transceiver, a telephonic interface, a bridge, a router, or a network card, etc. The STA 121 can use the wireless network interface 320 to communicate with the AP 110 over the WLAN 130. In at least some embodiments, the wireless network interface 320 includes a transceiver (not shown) coupled to multiple antennas which enables the STA 121 to support MU-MIMO beamforming.

The memory 340 may include a volatile memory element (e.g., random-access memory (RAM), such as DRAM, and SRAM, etc.) and a nonvolatile memory element (e.g., flash, read only memory (ROM), nonvolatile RAM, etc.). The mass storage 350 may also include a nonvolatile memory element (e.g., flash, hard drive, tape, CDROM, etc.). The memory 340 includes software which may include one or more separate programs, each of which includes a listing of executable instructions for implementing logical functions. Specifically, the software can include networking related software including a communications protocol stack which includes a physical layer, a link layer, a network layer and a transport layer. The network related software may be used by the processing device 310 to communicate with the AP 110 through the wireless network interface 320 and can further include instructions that cause the processing device 310 to perform the operations described herein in connection with FIG. 4. It should be noted, however, that the operations can also be implemented in hardware or a combination of software and hardware. The memory 340 may be located inside or outside the processing device 310, and may be coupled to the processing device 310 by using various well-known means.

FIG. 4 illustrates a method for transmitting data packets from an AP to STAs according to an embodiment of the present invention in connection with the network environment shown in FIG. 1.

At step 401, the AP sends a management frame (e.g., a beacon frame) to a plurality of STAs, for example, in a broadcasting manner. The beacon frame includes traffic indication information which indicates for each of the STAs if a downlink data packet is buffered at the AP for that STA. The traffic indication information, for example, is a traffic indication map (TIM). In this embodiment, a downlink data transmission interval includes two periods, e.g., a polling period and a data delivery period. The downlink data transmission interval is, for example, a duration of time that is used for downlink data transfer from the AP to a group of STAs (e.g., STAs 1, 2 and 3), which includes not only the time for downlink data transfer but also the time for polling and scheduling. The Polling period is defined as, for example, a window that a group of STAs (e.g., STAs 1, 2 and 3) are allowed to access the wireless channel to send polling frames (or a MIMO channel feedback frames). AP gives wireless channel access right to the STAs in the group only to send the polling frames (MIMO channel feedback frames) in the polling period. STAs that received the beacon frame correctly and is not included in the group shall not access the wireless channel. The Data delivery period is defined as, for example, a window that downlink data transfer from the AP to the group of STAs occurs. The beacon frame contains data indicating the polling period and the data delivery period. For example, the beacon frame may include fields that indicate the start time and duration of the polling period, the start time and duration of the data delivery period, etc. The data delivery period is allocated after the polling period.

Restricting the wireless channel access to a smaller group of STAs can significantly improve the performance by reducing collisions. In this embodiment, the polling period may be protected by a Network Allocation Vector (NAV) set. That is, only those STAs that are indicated by the TIM as having downlink data packets buffered at the AP are allowed to send a polling frame (or a MIMO channel feedback frame). The polling frame includes a power save poll (PS-Poll) frame or a trigger frame. Hereinafter, the polling frame and the MIMO channel feedback frame are referred as indication frame for the purpose of illustration.

The STAs periodically wake up to receive the TIM. After receiving the TIM, each of the STAs checks if there is a downlink data packet for itself buffered at the AP. The TIM may contain a list of all association identifiers (AIDs) that have downlink data packets buffered at the AP. In one example, there may be 2,008 unique AIDs, so the TIM alone may be up to 251 bytes. A bitmap may be used to indicate to any STA if the AP has a downlink data packet buffered for it. Each bit is tied to the AID. When a downlink data packet is buffered for that AID, the bit is set to 1. If no downlink data packet is buffered, the bit is set to 0.

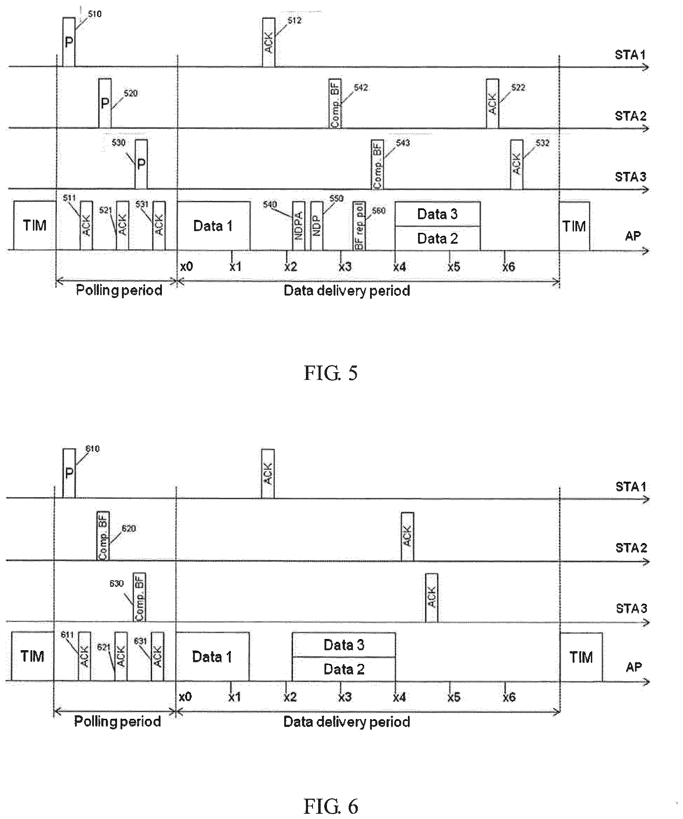

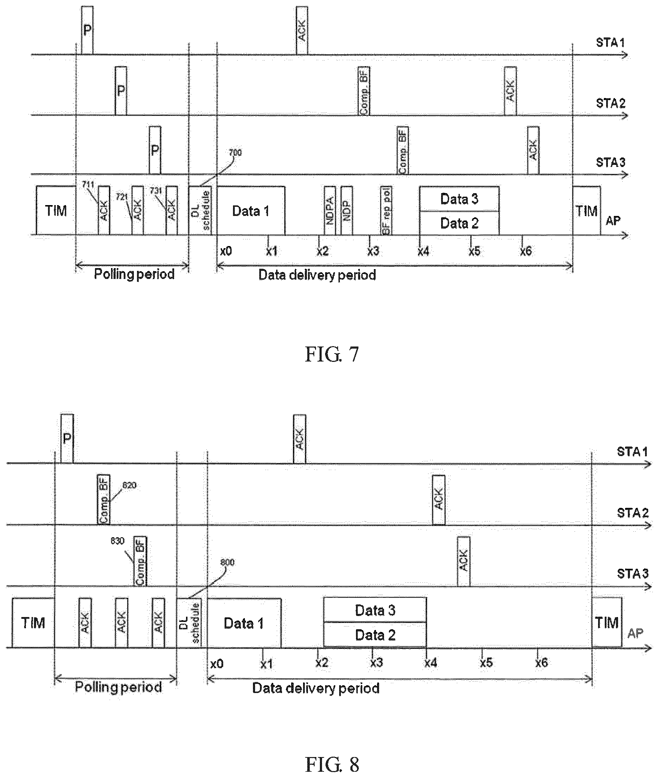

If there is a downlink data packet for the STA buffered at the AP, the STA sends an indication frame indicating that the station is awake and ready to receive the downlink data packet. For some stations, the indication frame may be a polling frame (e.g., a PS-poll frame, or a trigger frame), as shown in FIGS. 5-9. Alternatively, if the STA has information on current MIMO channel between the AP and the STA, and if the STA can generate MIMO channel feedback frame which is needed in calculating a weight matrix for MIMO/beamforming for data transmission to the STA, the STA can send the MIMO channel feedback frame instead of a polling frame to the AP. The MIMO channel feedback frame is, for example, a beamforming frame (e.g., compressed beamforming (Comp. BF) frame shown FIGS. 6 and 8). The order and the time of sending the indication frame is determined based on a predefined function, for example, based on a relative location/position of this STA within the TIM. For example, if the TIM bitmap is "0100100100", the STA in the second location sends the indication frame first, then the STA in the fifth location sends the indication frame, and the STA in the eighth location sends the indication frame last. The time for sending the indication frame is based on a function of a location of the identification of the STA within the TIM.

Optionally, the STA may go to a sleep state right after receiving the TIM until the time for it to send the indication frame in order to reduce power consumption.

The AP may further indicates in the beacon frame that only those STAs that have downlink data packets buffered at the AP are allowed to send an indication frame to the AP, and other STAs are not allowed to send any frame to the AP. For example, one bit information can be further defined in the beacon frame. If this bit is set to 1, for example, it means that only those STAs having downlink data packets buffered at the AP are allowed to send an indication frame.

At step 403, the AP receives the indication frames from the STAs which have downlink data packets buffered at the AP. The AP may know from the indication frame that the STAs can receive downlink data packets in a period before transmission of next beacon frame including traffic indication information.

At step 405, the AP sends information indicating wakeup times to the STAs. In this step, the AP figures out the actual length of each downlink data frame based on packet length and channel quality. Then the AP figure out the required time duration for delivery of each downlink frame including the downlink data frame transmission, anticipated ACK frame from the recipient, required backoff delays between consecutive transmissions, additional signaling overhead if needed (e.g., sounding and channel feedback for beamforming, Request to Send (RTS)/Clear to Send (CTS), etc.) Alternatively, the AP may also figure out the users with concurrent transmission (using MU-MIMO). Based on the above, the AP first figures out downlink transmission orders of the STAs. Then the AP figures out the expected transmission time for each STA which gives the wakeup time for each STA.

The AP sends information indicating the wakeup time (e.g., via an acknowledgement (ACK) frame or a downlink schedule frame) to the STA which has sent the indication frame to the AP. At the wakeup time, the STA is awake and monitors the wireless channel so as to receive the downlink data packet from the AP. In order to make sure that the STA receives the downlink data packet from the AP, the wakeup time should be no later than the actual transmission time of the downlink data packet. In case other frames, such as sounding frames, are necessary to be sent before sending the downlink data packet, the wakeup time should be no later than the transmission time of the sounding frames. The sounding frames may be, for example, a null data packet announcement (NDPA) frame and a null data packet (NDP) frame which are shown in FIGS. 5, 7 and 9.

In this embodiment, because the time duration for delivery of the downlink frame is flexibly determined based on the packet length and the channel quality, the time duration is long enough to make sure that the STA can receive the complete downlink frame. Furthermore, since the AP figures out the downlink transmission order of each STA and the transmission time for each STA, the AP may start to send downlink data to a STA right after that a downlink data delivery to another STA is finished. Thus, the channel resource is used efficiently and the channel efficiency is improved.

In the method shown in FIG. 4, after the STA receives the information indicating the wakeup time, it may go into the sleep state and do not monitor the wireless channel and do not send any frame, until the wakeup time for the STA itself, so as to reduce power consumption.

In some implementations of the method, e.g., in FIGS. 5-8, the AP sends back an ACK frame, as a response to the indication frame, to the STA. The wakeup time information is included in the ACK frame. Depending on available data size in the ACK frame, the wakeup time information can be coarse such that it may not be exactly the same as the actual downlink data packet transmission time. However, as described above, the wakeup time should be no later than the actual downlink data packet transmission time, or the transmission time of the sounding frames. At least part of a duration field in the ACK frame can be used to indicate the wakeup time information if the ACK frame is sent as a response to a PS-Poll frame. Optionally, the duration field may be shared by the wakeup time information and the More Data bit information. The ACK frame may use the lowest modulation and coding scheme (MCS) available that both the AP and the STA agree to use, without explicitly indicating the used MCS. The ACK frame may further include frame type information indicating that this frame is for acknowledgement, and identification of specific acknowledgement.

In some implementations of the method, e.g., in FIGS. 7-9, a new management frame (i.e., a downlink (DL) schedule frame) carrying the wakeup time information is sent from the AP to the STA after the polling period, for example, after all indication frames transmission is completed, and/or after sending the ACK frame to every STA that has a downlink data packet buffered at the AP.

In order to reduce the power consumption of the STA, after receiving the wakeup time information, the STA may go back to the sleep state until the wakeup time.

At step 407, the AP sends a downlink data packet to the STA when the STA is supposed to be awake. This means that the AP will start to send the packet at or later than the wakeup time of that station. At the wakeup time, the STA is awake and monitors if the current packet is for the STA itself. If the received packet is not for the STA itself, the STA may either go back to the sleep state until the next packet or keep monitoring the wireless channel until the received packet is for itself. When the received packet is for the STA itself, the STA completes the downlink data packet reception process. The STA may use the following to determine whether the packet is for itself: the STA receives a physical layer header portion of the packet, and checks an identification of a receiver of the packet. If the identification of the receiver includes this STA, it is determined that the packet is for the STA itself. Since the AP sends the downlink data packet to the STA when the STA is awake, the STA can receive the downlink data packet properly so that the channel efficiency is increased.

FIGS. 5-9 illustrate various implementations of the method illustrated in FIG. 4. Although FIGS. 5-9 depict three STAs, i.e., STA 1, STA 2 and STA 3 as an example, it is well known that different numbers of STAs can be included. The AP in FIGS. 5-9 has a structure the same as or similar to the AP shown in FIG. 2. Meanwhile, the STAs 1, 2 and 3 have structures the same or similar to the STA 121 shown in FIG. 3.

FIG. 5 illustrates a first implementation of the method of FIG. 4, in which the STA 1 uses normal transmission (i.e., single user transmission), and the STA 2 and STA 3 use MU-MIMO transmission. The AP has multiple antennas so that the AP is enabled to transmit downlink data packets to the STA 2 and STA 3 via the MU-MIMO transmission.

The AP periodically sends a beacon frame including a TIM to the STAs 1, 2 and 3. The downlink data transmission interval includes two periods, i.e., the polling period and the data delivery period. The polling period is protected by a NAV. After receiving the TIM, the STAs 1, 2 and 3 determine that downlink data packets are buffered at the AP by interpreting the TIM. The STAs 1, 2 and 3 send polling frames (e.g., PS-Poll frames or trigger frames) 510, 520 and 530 to the AP in different designated times respectively in the Polling period. The AP responds with ACK frames 511, 521 and 531 to the STA 1, STA 2 and STA 3, respectively in the polling period. The designated time for sending the polling frame may be calculated according to the following equation (1):

$$T=T0*(N-1)+T1 \qquad (1)$$

where N denotes the order of the location of the STA within the TIM from the beginning out of those STAs that the AP has buffered downlink data packets to send; T0 denotes the sum of the transmission time of polling frame, the transmission time of ACK frame, and the inter packet transmission gap; and T1 denotes predetermined time constant from the end of the beacon frame transmission.

In another example, the designated time for sending polling frame may be calculated according to the following equation (2):

$$T=T0*(\text{shift}(N, N0)-1)+T1 \qquad (2)$$

where N denotes the order of the location of the STA within the TIM from the beginning out of those STAs that the AP 40 has buffered data packets to send; NO denotes predetermined cyclic shift offset value; Shift(x, y) denotes cyclic shift of integer value x with the offset of y, where the carry over happens if the shifted value is greater than total number of STAs having downlink data packets buffered at the AP; T0 denotes the transmission time of polling frame, the transmission time of ACK frame, and the inter packet transmission gap; and T1 denotes a predetermined time constant from the end of the beacon frame transmission.

In the equation (2), T0 is further determined by the counter value of current beacon frame.

The STAs 1, 2 and 3 may go to the sleep state after receiving the TIM until the designated times for them to send the polling frames 510, 520 and 530 in order to reduce power consumption.

Each of the ACK frames 511, 521 and 531 carries information indicating a wakeup time for the corresponding STA. In this example, because the AP sends the downlink data packets to the STA 2 and STA 3 via a MU-MIMO transmission, the wakeup time indicated in the ACK frame 521 for the STA 2 is the same as the wakeup time indicated in the ACK frame 531 for the STA 3. The STA 1 is wake at the wakeup time indicated in the ACK frame 511, and monitors the wireless channel between the AP and the STA 1. The wakeup time for the STA 1 is not later than the transmission time of Data 1. After receiving Data 1, the STA 1 sends back an ACK frame 512 which indicates that the STA 1 receives Data 1 correctly. Afterwards, the STA 1 goes back to the sleep state until the next data packet.

For MU-MIMO transmission, at the time the AP sends out the beacon frame including the TIM, the AP has finished the MU-MIMO scheduling and determined a user pairing for MU-MIMO. Optionally, in this implementation, if a certain STA do not send a polling frame (or a MIMO channel feedback frame) to the AP during the polling period, the AP removes the STA from the scheduled user pairing and the MU-MIMO transmission occurs without including that STA. For example, if the AP has downlink data packets to send to, for example, STAs A, B, C within one MU-MIMO group. However, STA C does not send a polling frame (or a MIMO channel feedback frame) after receiving the TIM in the polling period, the MU-MIMO transmission happens only to the STAs A and B.

In this implementation shown in FIG. 5, the STA 2 and STA 3 are in the user pairing. Before the AP sends Data 2 and Data 3 to the STA 2 and STA 3 via the MU-MIMO transmission, the AP needs to acquire channel information of the STA 2 and STA 3. In order to acquire the channel information of the STA 2 and STA 3, the AP sends a null data packet announcement (NDPA) frame 540 and a null data packet (NDP) frame 550 to the STA 2 and STA 3 so as to acquire the channel information of the STA 2 and STA 3. Thus, the wakeup times of the STA 2 and STA 3 are not later than the transmission time of the NDPA frame 540 and the NDP frame 550. The STA 2 and STA 3 have the same wakeup time (the wakeup time indicated in the ACK frame 521 or the wakeup time indicated in the ACK frame 531). The AP sends the NDPA frame 540 and the NDP frame 550 to the STA 2 and the STA 3, so as to acquire channel information of the STAs 2 and 3 by using a sounding protocol. The NDPA frame 540 includes information of the STAs 2 and 3, also includes information about the first responding STA among the STAs 2 and 3. For example, the NDPA frame 540 includes information informing that the STA2 transmits a beamforming frame as a response of the NDP frame 550 earlier than the STA 3. The NDP 550 is sent to the STAs 2 and 3 after a time duration, e.g., a short interframe space (SIFS) section, after the NDPA frame 540 is sent to the STAs 2 and 3.

In this implementation shown in FIG. 5, the STA 2 has a response priority to the NDP frame 550. The STA 2 checks that it first sends the beamforming frame (e.g., the compressed beamforming (Comp. BF) frame) 542 as the response of the NDP frame 550. Therefore, the STA 2 sends the Comp. BF frame 542 including the channel information of the STA 2 to the AP after the NDP frame 550 is sent to the STAs 2 and 3.

The AP sends a beamforming report poll (BF rep. poll) frame 560 to the STA 3 so as to implement the sounding of the remaining STA 3, that is, acquire the channel information of the STA 3. The STA 3 receives the BF rep. poll frame 560 and sends a Comp. BF frame 543 including the channel information of the STA 3 to the AP.

The AP acquires the channel information of the STAs 2 and 3 from the Comp. BF frames 542 and 543, and then in order to transmit Data 2 and Data 3 to the STAs 2 and 3 through the beamforming according to the MIMO scheme, generates a weight matrix necessary for the beamforming by using the channel information. Afterwards, the AP sends Data 2 and Data 3 to the STAs 2 and 3 according to the MIMO scheme. Here, the AP generates the weight matrix for beamforming for each of the STAs 2 and 3 according to the MIMO scheme, or generates the weight matrix for simultaneously beamforming for the STAs 2 and 3 according to a MU-MIMO scheme.

The AP sends Data 2 and Data 3 to the STAs 2 and 3 through the MU-MIMO transmission. In this example, Data 2 is for the STA 2, and Data 3 is for the STA 3. After the STAs 2 and 3 receives Data 2 and Data 3, the STAs 2 and 3 transmit an ACK frame 522 and an ACK frame 532 to the AP, respectively. Afterwards, the STAs 2 and 3 go back to the sleep state.

FIG. 6 illustrates a second implementation of the method shown in FIG. 4. In this implementation, the AP considers the STAs 2 and 3 are able to receive downlink data packets if the AP receives the Comp. BF frames 620 and 630 instead of polling frames. The Comp. BF frames 620 and 630 include channel information of the STAs 2 and 3 which are needed in calculating a weight matrix for MIMO/beamforming for data transmission to the STAs 2 and 3.

In this implementation shown in FIG. 6, because the channel information of the STAs 2 and 3 are sent to the AP via the Comp. BF frames 620 and 630 in the polling period, the AP does not need to send a NDPA frame and a NDP frame to the STAs 2 and 3 in the data delivery period as needed in the implementation shown in FIG. 5.

After the STA 1 receives the TIM, the STA 1 sends a polling frame 610 to the AP in the Polling period. The STAs 2 and 3 send the Comp. BF frames 620 and 630 to the AP in the Polling period, respectively. The times for sending the polling frame 610, Comp. BF frame 620 and Comp. BF frame 630 may be calculated according to the equation (1) or (2) described above. The AP sends back an ACK frame 611 including the wakeup time to the STA 1, as a response to the polling frame 610. The wakeup time for the STA 1 is not later than the actual transmission time of Data 1. AP sends back the ACK frames 621 and 631 to the STAs 2 and 3 respectively. The ACK frame 621 includes the wakeup time information for the STA 2, and the ACK frame 631 includes the wakeup time information for the STA 3. Because the AP simultaneously sends Data 2 and Data 3 to the STAs 2 and 3 via the MU-MIMO transmission, the wakeup time for the STA 2 is the same as the wakeup time for the STA 3. The wakeup times for the STAs 2 and 3 are not later than the actual transmission time of Data 2 and Data 3.

FIG. 7 illustrates a third implementation of the method shown in FIG. 4. The downlink data transmission interval includes a polling period and a data delivery period. The polling period may be protected by the NAV. Compared with the implementation shown in FIG. 5, instead of sending the information indicating a wakeup time in an ACK frame, the AP sends a new management frame (e.g., the downlink (DL) schedule frame 700), for example, in a multicast manner. The DL schedule frame 700 includes information indicating a wakeup time for every STA having a downlink data packet buffered at the AP, after the polling period, e.g., after finishing transmission of the ACK frame to every STA that has a downlink data packet buffered at the AP. Alternatively, the transmission of the DL schedule frame 700 can be included in the Data delivery period. For example, the AP sends the DL schedule frame 700 to the STAs 1, 2 and 3 at the beginning of the Data delivery period.

In this implementation shown in FIG. 7, the ACK frames 711, 721 and 731 are similar to the ACK frames 511, 521 and 531 as shown in FIG. 5. The ACK frames 711, 721 and 731 may also include information indicating a wakeup time if needed.

FIG. 8 illustrates a fourth implementation of the method shown in FIG. 4. The implementation in FIG. 8 is similar to the implementation in FIG. 7. Compared with the implementation shown in FIG. 7, the STAs 2 and 3 send Comp. BF frames 820 and 830 to the AP instead of sending polling frames to the AP. The Comp. BF frames 820 and 830 carry channel information of the STAs 2 and 3, respectively. The AP sends Data 2 and Data 3 of the STAs 2 and 3 via the MU-MIMO transmission. The information indicating wakeup times for the STAs 1, 2 and 3 is included in the DL schedule frame 800 sent from the AP (e.g., in a multicast manner) to the STAs 1, 2 and 3 after the polling period. In this implementation, the transmission of the DL schedule frame 800 may be included in the Data delivery period. For example, the AP sends the DL schedule frame 800 to the STAs 1, 2 and 3 at the beginning of the Data delivery period.

The wakeup time of the STA 1 is not later than the actual transmission time of Data 1 of the STA 1. The wakeup time of the STA 2 is the same as the wakeup time of the STA 3, and is not later than the transmission time of Data 2 and Data 3.

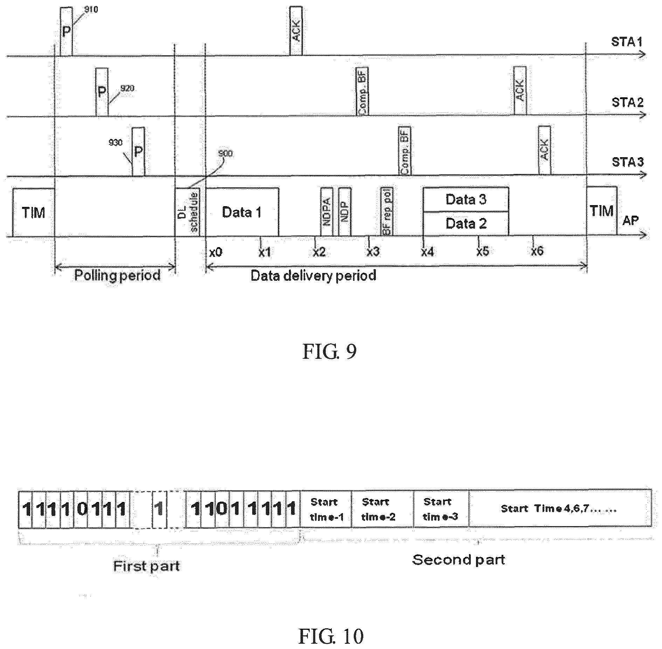

FIG. 9 illustrates a fifth implementation of the method shown in FIG. 4, where no ACK frame follows each polling frame. After the STAs 1, 2 and 3 send the polling frames 910, 920 and 930 respectively to the AP in the Polling period, the AP sends group ACK information together with downlink schedule information which indicates wakeup times for the STAs 1, 2 and 3, for example, in a multicast manner. The group ACK information and the downlink schedule information are included in a same frame, i.e., the DL schedule frame 900 and are sent to the STAs 1, 2 and 3 after the polling period. In this embodiment, the transmission of the DL schedule frame 900 may be included in the Data delivery period. For example, the AP sends the DL schedule frame 900 to the STAs 1, 2 and 3 at the beginning of the Data delivery period.

FIG. 10 illustrates an exemplary frame format of the DL schedule frame 900 shown in FIG. 9.

The DL schedule frame 900 may include fields to indicate the group ACK information together with the downlink schedule information. As shown in FIG. 10, the DL schedule frame 900 includes two parts. The first part is a bit map in which each bit corresponds to a STA from which the AP expects to receive a polling frame. For example, in the order that these STAs being paged in the TIM. A value of "1" indicates that the AP successfully receives a polling frame from the corresponding STA, and a value of "0" indicates that the AP does not receive a polling frame from the corresponding STA. The second part indicates the wakeup times.

Each "start time" indicates the wakeup time of the corresponding STA. In this example, the AP may allocate the "start time" only to those STAs that the AP indicates as "1" in the first part of the DL schedule frame 900, and the order is the same as that in the bit map. Therefore, no additional indication is needed to figure out a STA corresponding to each "start time" information.

The various embodiments described herein are described in the general context of method steps or processes, which may be implemented in one embodiment by a computer program product which is accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

The medium may be an electronic, magnetic, optical, electromagnetic, infrared, semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include DVD, compact disk-read-only memory (CD-ROM), and compact disk-read/write (CD-R/W).

**Claims**

1. An access point for a wireless local area network (WLAN), comprising:

   a processing device (210);
   a transceiver (220, 230); and
   a memory (240, 250) having a plurality of instructions stored thereon which, when executed by the processing device (210), cause the processing device to cause the transceiver to:

   broadcast a beacon frame including information which defines a poll period during which a group of stations are allowed to send indication frames, wherein the indication frames indicate that the group of stations are awake and ready to receive downlink data packet; and
   receive during the poll period a indication frame from a station of the group of stations for which the access point has a data packet buffered thereon;

   **characterized in that** the transceiver is further configured to:

   after the poll period, send information indicating a wakeup time to the station; and
   send the data packet to the station at or after the wakeup time.

2. The access point according to claim 1, wherein the polling period is protected by a Network Allocation Vector (NAV) set by the access point.

3. The access point according to claim 1, wherein the beacon frame further comprises information that defines a data delivery period allocated after the poll period, and the transceiver sends the downlink schedule frame to the station at the beginning of the data delivery period.

4. The access point according to claim 1, wherein the process to send information indicating the wakeup time to the station includes sending information indicating the wakeup time via an acknowledgement (ACK) frame or a downlink schedule frame to the station.

5. The access point according to claim 1, wherein the transceiver sends the data packet to the station via a multi-user multiple-input multiple-output (MU-MIMO) transmission.

6. A method for data transmission in a wireless local area network (WLAN), comprising:

    broadcasting (401), by an access point (AP), a beacon frame comprising information that defines a poll period during which a group of stations are allowed to send indication frames, wherein the indication frames indicate that the group of stations are awake and ready to receive downlink data packet; and
    in the poll period, receiving (403), by the AP, a indication frame from a station of the group of stations for which the AP has a data packet buffered thereon;
    **characterized in that** the method further comprises:

        sending (405), after the poll period, information indicating a wakeup time to the station ; and
        sending (407), by the AP, the data packet to the station not earlier than the wakeup time.

7. The method according to claim 6, comprising:
protecting, by the AP, the polling period by setting a Network Allocation Vector (NAV).

8. The method according to claim 6, wherein the beacon frame further comprises information defining a data delivery period allocated after the polling, and the AP sends the downlink schedule frame at the beginning of the data delivery period.

9. The method according to claim 6, wherein the AP multicasts the downlink schedule frame to the station.

10. The method according to claim 8, comprising:
indicating, by the AP, to the station a time for sending the indication frame, wherein the time for sending the indication frame is defined as a function of a position of the station in a traffic information map (TIM) in the beacon frame.

11. The method according to claim 6, wherein the sending the data packet to the station comprises:
sending, by the AP, the data packet to the station via a multi-user multiple-input multiple-output (MU-MIMO) transmission, at or after the wakeup time.

12. A station for a wireless local area network (WLAN), comprising:

    a processing device (310) ; and
    a memory (340, 350) having a plurality of instructions stored thereon which, when executed by the processing device, cause the processing device to implement operations comprising:

        receiving from an access point (AP) a beacon frame comprising information that defines a polling period during which the station is allowed to send a indication frame, wherein the indication frame indicates that the station is awake and ready to receive downlink data packet; and
        after determining that the AP has a data packet buffered for the station, sending the indication frames to the AP in the polling period;

    **characterized in that** the operations further comprise:

        receiving, after the poll period, information indicating a wakeup time from the AP; and
        being awake at the wakeup time, and receiving the data packet sent from the AP.

13. The station according to claim 12, wherein the sending the indication frame comprises:
sending a PS-Poll frame at a time defined as a function of a position of the station in a traffic indication map (TIM) included in a beacon frame.

14. The station according to claim 13, wherein the operations further comprise:
after receiving the beacon frame, going into a sleep state until the time of sending the indication frame.

15. The station according to claim 12, wherein the beacon frame comprises information defining a data delivery period allocated after the polling period, and the receiving the downlink schedule frame from the AP comprises:
receiving the downlink schedule frame at the beginning of the data delivery period.

**Patentansprüche**

1. Zugangspunkt für ein drahtloses lokales Netzwerk (WLAN), umfassend:

    eine Verarbeitungsvorrichtung (210);

einen Sendeempfänger (220, 230); und
einen Speicher (240, 250) mit einer Mehrzahl von darauf gespeicherten Anweisungen, die bei Ausführung durch die Verarbeitungsvorrichtung (210) die Verarbeitungsvorrichtung veranlassen, den Sendeempfänger zu veranlassen zum:

Rundsenden eines "Beacon"-Rahmens, der Informationen umfasst, die eine Abfrageperiode definieren, während der eine Gruppe von Stationen Anzeigerahmen senden darf, wobei die Anzeigerahmen anzeigen, dass die Gruppe von Stationen wach und zum Empfangen eines Downlink-Datenpakets bereit sind; und
Empfangen während der Abfrageperiode eines Anzeigerahmens von einer Station der Gruppe von Stationen, für welche der Zugangspunkt ein Datenpaket darauf gepuffert aufweist;

dadurch gekennzeichnet, dass der Sendeempfänger ferner konfiguriert ist zum:

Senden von Informationen, die eine Weckzeit anzeigen, an die Station nach der Abfrageperiode; und
Senden des Datenpakets zu oder nach der Weckzeit an die Station.

2. Zugangspunkt nach Anspruch 1, wobei die Abfrageperiode durch einen vom Zugangspunkt gesetzten Netzbelegungsvektor (NAV) geschützt ist.

3. Zugangspunkt nach Anspruch 1, wobei der "Beacon"-Rahmen ferner Informationen umfasst, die eine nach der Abfrageperiode zugeteilte Datenzustellungsperiode definieren, und der Sendeempfänger den Downlink-Zeitplanrahmen zu Beginn der Datenzustellungsperiode an die Station sendet.

4. Zugangspunkt nach Anspruch 1, wobei der Prozess zum Senden von die Weckzeit anzeigenden Informationen an die Station ein Senden von die Weckzeit anzeigenden Informationen über einen Bestätigungs(ACK)-Rahmen oder einen Downlink-Zeitplanrahmen an die Station umfasst.

5. Zugangspunkt nach Anspruch 1, wobei der Sendeempfänger das Datenpaket über eine Mehrbenutzer-Mehrfacheingangs-Mehrfachausgangs(MU-MIMO)-Übertragung an die Station sendet.

6. Verfahren zur Datenübertragung in einem drahtlosen lokalen Netzwerk (WLAN), umfassend:

Rundsenden (401) durch einen Zugangspunkt (AP) eines "Beacon"-Rahmens, der Informationen umfasst, die eine Abfrageperiode definieren, während der eine Gruppe von Stationen Anzeigerahmen senden darf, wobei die Anzeigerahmen anzeigen, dass die Gruppe von Stationen wach und zum Empfangen eines Downlink-Datenpakets bereit sind; und
Empfangen (403) in der Abfrageperiode durch den AP eines Anzeigerahmens von einer Station der Gruppe von Stationen, für welche der AP ein Datenpaket darauf gepuffert aufweist;
dadurch gekennzeichnet, dass das Verfahren ferner umfasst:

Senden (405) von Informationen, welche eine Weckzeit anzeigen, an die Station nach der Abfrageperiode; und
Senden (407) des Datenpakets durch den AP nicht früher als zur Weckzeit an die Station.

7. Verfahren nach Anspruch 6, umfassend:
Schützen der Abfrageperiode durch Setzen eines Netzbelegungsvektors (NAV) durch den AP.

8. Verfahren nach Anspruch 6, wobei der "Beacon"-Rahmen ferner Informationen umfasst, die eine nach dem Abfragen zugeteilte Datenzustellungsperiode definieren, und der AP den Downlink-Zeitplanrahmen zu Beginn der Datenzustellungsperiode sendet.

9. Verfahren nach Anspruch 6, wobei der AP den Downlink-Zeitplanrahmen per "Multicast" an die Station sendet.

10. Verfahren nach Anspruch 8, umfassend:
Anzeigen für die Station durch den AP einer Zeit zum Senden des Anzeigerahmens, wobei die Zeit zum Senden des Anzeigerahmens als eine Funktion einer Position der Station in einer Verkehrsinformationskarte (TIM) im "Beacon"-Rahmen definiert wird.

11. Verfahren nach Anspruch 6, wobei das Senden des Datenpakets an die Station umfasst:
Senden des Datenpakets durch den AP über eine Mehrbenutzer-Mehrfacheingangs-Mehrfachausgangs(MU-MIMO)-Übertragung zu oder nach der Weckzeit an die Station.

12. Station für ein drahtloses lokales Netzwerk (WLAN), umfassend:

eine Verarbeitungsvorrichtung (310); und
einen Speicher (340, 350) mit einer Mehrzahl von darauf gespeicherten Anweisungen, die bei Ausführung durch die Verarbeitungsvorrichtung die Verarbeitungsvorrichtung veranlassen, Operationen zu implementieren, die umfassen:

Empfangen von einem Zugangspunkt (AP) eines ""Beacon"-Rahmens, der Informationen umfasst, die eine Abfrageperiode definieren, während der die Station einen Anzeigerahmen senden darf, wobei der Anzeigerahmen anzeigt, dass die Station wach und zum Empfangen eines Downlink-Datenpakets bereit ist; und
Senden nach dem Bestimmen, dass der AP ein Datenpaket für die Station gepuffert aufweist, der Anzeigerahmen in der Abfrageperiode an den AP;

**dadurch gekennzeichnet, dass** die Operationen ferner umfassen:

Empfangen von Informationen, die eine Weckzeit anzeigen, vom AP nach der Abfrageperiode; und
Wachsein zur Weckzeit und Empfangen des vom AP gesendeten Datenpakets.

13. Station nach Anspruch 12, wobei das Senden des Anzeigerahmens umfasst:
Senden eines PS-Abfragerahmens zu einer Zeit, die als eine Funktion einer Position der Station in einer Verkehrsanzeigekarte (TIM) definiert ist, die in einem "Beacon"-Rahmen enthalten ist.

14. Station nach Anspruch 13, wobei die Operationen ferner umfassen:
Übergehen nach Empfang des "Beacon"-Rahmens in einen Schlafzustand bis zur Zeit des Sendens des Anzeigerahmens.

15. Station nach Anspruch 12, wobei der "Beacon"-Rahmen ferner Informationen umfasst, die eine nach der Abfrageperiode zugeteilte Datenzustellungsperiode definieren, und das Empfangen des Downlink-Zeitplanrahmens vom AP umfasst:
Empfangen des Downlink-Zeitplanrahmens zu Beginn der Datenzustellungsperiode.

## Revendications

1. Point d'accès pour un réseau local sans fil (WLAN), comprenant :

un dispositif de traitement (210) ;
un émetteur/récepteur (220, 230) ; et
une mémoire (240, 250), dans laquelle est stockée une pluralité d'instructions qui, lorsqu'elles sont exécutées par le dispositif de traitement (210), amènent le dispositif de traitement à faire en sorte que l'émetteur/récepteur :

diffuse une trame balise contenant des informations qui définissent une période de sondage durant laquelle les stations d'un groupe de stations sont autorisées à envoyer des trames d'indication, les trames d'indication indiquant que les stations du groupe de stations sont activées et prêtes à recevoir un paquet de données de liaison descendante ; et

reçoive, durant la période de sondage, une trame d'indication provenant d'une station du groupe de stations pour lequel le point d'accès possède un paquet de données mis en tampon sur ce point d'accès ;

**caractérisé en ce que** l'émetteur/récepteur est également conçu pour :

après la période de sondage, envoyer à la station des informations indiquant une heure d'activation ; et
envoyer le paquet de données à la station à l'heure d'activation ou après l'heure d'activation.

2. Point d'accès selon la revendication 1, dans lequel la période de sondage est protégée par un vecteur d'attribution de réseau (VAN) établi par le point d'accès.

3. Point d'accès selon la revendication 1, dans lequel la trame balise contient également des informations qui définissent une période de remise de données attribuée après la période de sondage, et l'émetteur/récepteur envoie la trame d'ordonnancement de liaison descendante à la station au début de la période de remise de données.

4. Point d'accès selon la revendication 1, dans lequel le processus d'envoi à la station d'informations indiquant l'heure d'activation consiste à envoyer à la station des informations indiquant l'heure d'activation par l'intermédiaire d'une trame d'accusé de réception (ACK) ou d'une trame d'ordonnancement de liaison descendante.

5. Point d'accès selon la revendication 1, dans lequel l'émetteur/récepteur envoie le paquet de données à la station par l'intermédiaire d'une émission à entrées multiples, sorties multiples et utilisateurs multiples (MU-MIMO).

6. Procédé pour l'émission de données dans un réseau local sans fil (WLAN), comprenant les étapes consistant à :

diffuser (401), par un point d'accès (AP), une trame balise contenant des informations qui définissent une période de sondage durant laquelle les stations d'un groupe de stations sont autorisées à envoyer des trames d'indication, les trames d'indication indiquant que les stations du groupe de stations sont activées et prêtes à recevoir un paquet de données de liaison descendante ; et

durant la période de sondage, recevoir (403), par l'AP, une trame d'indication provenant d'une station du groupe de stations pour lequel l'AP possède un paquet de données mis en tampon sur cet AP ;

**caractérisé en ce que** le procédé comprend également les étapes consistant à :

envoyer (405) à la station, après la période de sondage, des informations indiquant une heure d'activation ; et
envoyer (407) à la station, par l'AP, le paquet de données à un moment qui n'est pas antérieur à l'heure d'activation.

**7.** Procédé selon la revendication 6, comprenant l'étape consistant à :
protéger, par l'AP, la période de sondage par l'établissement d'un vecteur d'attribution de réseau (VAN).

**8.** Procédé selon la revendication 6, dans lequel la trame balise contient également des informations qui définissent une période de remise de données attribuée après le sondage, et l'AP envoie la trame d'ordonnancement de liaison descendante au début de la période de remise de données.

**9.** Procédé selon la revendication 6, dans lequel l'AP envoie en multidiffusion à la station la trame d'ordonnancement de liaison descendante.

**10.** Procédé selon la revendication 8, comprenant l'étape consistant à :
indiquer à la station, par l'AP, une heure d'envoi de la trame d'indication, l'heure d'envoi de la trame d'indication étant définie comme étant une fonction d'une position de la station dans une carte d'informations de trafic (TIM) contenue dans la trame balise.

**11.** Procédé selon la revendication 6, dans lequel l'envoi du paquet de données à la station comprend l'étape consistant à :
envoyer à la station, par l'AP, le paquet de données par l'intermédiaire d'une émission à entrées multiples, sorties multiples et utilisateurs multiples (MU-MIMO), à l'heure d'activation ou après l'heure d'activation.

**12.** Station pour un réseau local sans fil (WLAN), comprenant :

un dispositif de traitement (310) ; et
une mémoire (340, 350), dans laquelle est stockée une pluralité d'instructions qui, lorsqu'elles sont exécutées par le dispositif de traitement, amènent le dispositif de traitement à mettre en oeuvre des opérations consistant à :

recevoir d'un point d'accès (AP) une trame balise contenant des informations qui définissent une période de sondage durant laquelle la station est autorisée à envoyer une trame d'indication, la trame d'indication indiquant que la station est activée et prête à recevoir un paquet de données de liaison descendante ; et
après avoir déterminé que l'AP possède un paquet de données mis en tampon pour la station, envoyer les trames d'indication à l'AP durant la période de sondage ;

**caractérisée en ce que** les opérations comprennent également celles consistant à :

recevoir de l'AP, après la période de sondage, des informations indiquant une heure d'activation ; et
être activé à l'heure d'activation et recevoir le paquet de données envoyé par l'AP.

**13.** Station selon la revendication 12, dans laquelle l'envoi de la trame d'indication consiste à :
envoyer une trame PS-Poll à une heure définie comme étant une fonction d'une position de la station dans une carte d'informations de trafic (TIM) contenue dans une trame balise.

**14.** Station selon la revendication 13, dans laquelle les opérations comprennent également celle consistant à :
après la réception de la trame balise, passer dans un état de veille jusqu'à l'heure d'envoi de la trame d'indication.

**15.** Station selon la revendication 12, dans laquelle la trame balise contient des informations définissant une période de remise de données attribuée après la période de sondage, et la réception de la trame d'ordonnancement de liaison descendante depuis l'AP consiste à :
recevoir la trame d'ordonnancement de liaison descendante au début de la période de remise de données.

FIG. 1

FIG. 2

121

| 310 | 360 | 320 | 370 |
|---|---|---|---|
| Processing Device | I/O Interface | Wireless Network Interface | Video Adapter |

300

Data Bus

| 340 | 350 | 330 |
|---|---|---|
| Memory | Mass Storage | Network Interface |

FIG. 3

401
send a management frame to stations

403
Receive frames from stations having downlink data packets buffered at the AP

405
Send information indicating wake up times to the stations

407
Send downlink data packets to the stations at or after the wake up times

FIG. 4

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2844016 A1

- EP 2160061 A2